Europäisches Patentamt

European Patent Office

Office européen des brevets

(11) Publication number: **0 173 374**
A1

# EUROPEAN PATENT APPLICATION

(21) Application number: 85201224.4

(22) Date of filing: 23.07.85

(51) Int. Cl.⁴: **A 01 K 1/00**, F 24 F 7/06

(30) Priority: 10.10.84 NL 8403082
31.07.84 NL 8402389
31.07.84 NL 8402390

(43) Date of publication of application: 05.03.86
Bulletin 86/10

(84) Designated Contracting States: **AT BE CH DE FR GB IT LI LU NL SE**

(71) Applicant: **Smulders, Adrianus Henrikus Josephus, Sniederslaan 126, NL-5531 EN Bladel (NL)**

(72) Inventor: **Smulders, Adrianus Henrikus Josephus, Sniederslaan 126, NL-5531 EN Bladel (NL)**

(74) Representative: **Timmermans, Anthonius C.Th., Ir., Octrooibureau Zuid Veilig Oord 4, Postbus 188, NL-5530 AD Bladel (NL)**

(54) Suction-ventilation-shaft for a life-stock house.

(57) Ventilation exhaust shaft for vertical installation on a life-stock house, especially on a life-stock house for pigs, containing a controllable axial fan (4), wherein the shaft is provided at at least one of the two ends with a device (5/26) with which the intensity of the flow of air through the shaft can be varied because this device has an air flow transmission opening the size of which can be controlled by an electrical servo-motor (13).

Suction-ventilation-shaft for a life-stock house.

The invention is related to a ventilation exhaust shaft for a life-stock house, especially for pigs, to a life-stock house provided with such a ventilation exhaust shaft and to a system for controlling the environment in such a life-stock house provided with such a ventilation exhaust shaft. Moreover the invention relates to the component parts which are clearly destined to be used in such a ventilation shaft.

In modern life-stock farming where great numbers of life-stock, for instance cows, pigs or poultry are present in a building it is of utmost importance to control accurately the environment in these buildings which will be called life-stock houses. One of the main factors which should be controlled is holding the temperature at a certain very constant value.

In such life-stock houses for pigs it is usual to build practically completely closed rooms in which the pigs are located. For controlling the environment it is necessary to have a very regular but variable flow of air in the room. This is usually realized by means of an exhaust ventilator which is located in the upper part on one side of the room. The air supply usually takes place at the upper side of the wall which is located opposite the exhaust ventilation shaft.

The temperature in the room is for the greater part determined by the heat release of the pigs. This heat release varies strongly dependent on the number of pigs in the room and on the "living weight" of the pigs. In fatting-farms the pigs are usually brought into the rooms when they are young and have a low weight. During the stay in the room they are fattened until they have the desired end-weight. It is clear that the heat release of the young pigs is much lower than the heat release of the fattened pigs. Due thereto the heat release varies strongly during the period of fattening. The temperature of course is also strongly dependent on the condition of the air which is supplied, especially the temperature and the humidity thereof. This condition will in summer be quite different from that in winter and also will be influenced by the wind. As it is desirable that during the entire fattening period the environment in the room of the house be as constant as possible it is necessary to accurately control the flow of air through the room. For a certain case the following table illustrates the number of m³ per hour that is necessary under the various circumstances.

| Weather conditions | Number of pigs | Kg per pig | Total living weight | % | m³/hour |
|---|---|---|---|---|---|
| winter | 80 | x 25 | = 2000 | 20 | = 400 |
| summer | 80 | x 25 | = 2000 | 100 | = 2000 |
| winter | 80 | x 100 | = 8000 | 20 | = 1600 |
| summer | 80 | x 100 | = 8000 | 100 | = 8000 |

From the table it is clear that for this example

0173374

a variation in the air flow is necessary from 400 m³ per hour to 8000 m³ per hour. For other examples this variation of the quantity of required air will as a matter of fact be different but it is always true that the maximum quantity of air is very high with respect to the minimum quantity of required air.

The variation of the air flow between the minimum and the maximum value usually is carried out by varying the number of revolutions of a fan which is located at the axis of the exhaust ventilation shaft. Although a very large variation range can be obtained by controlling the supply voltage of the ventilator practice has shown that this control, especially at the lower required quantities of air leaves much to be desired. Just at these low quantities of air, when the ventilator operates at a low voltage and rotates slowly, the quantity of air flowing through the room is strongly dependent on all kinds of factors especially the difference in pressure between the room and the outer air. This pressure difference for instance is strongly influenced by a sudden, even very short-time increase of the temperature in the room or outside and by a change of the wind in force and/or direction. As a consequence, with low required quantities of air the environment in the room of the life-stock house will not be very constant which is a great disadvantage for the condition of the pigs and has especially a bad influence on their growth. At higher numbers of revolutions of the fan these influences are much lower.

To minimize the here above described disadvantage to some extent it has been proposed to provide at the lower side of the exhaust ventilation shafts, which are usually arranged vertically at the life-stock house, organs, usually called diaphragms, with which the supply opening to the ventilation shaft can be increased or decreased at will. These diaphragms mostly consist of two blades with

0173374

V-like cuts and can be moved to or from each other. The blades slide over each other and the surface between the V-like cuts determines of course the air flow opening. In some cases also a so-called iris diaphragm with blades has been used.

Sometimes the number of revolutions of the fan in the exhaust shaft is controlled by hand, based on experimentally obtained data but also a control via a micro-processor which receives a control signal from a temperature sensor in the room of the life-stock house has been used. The adjustment of the opening in the diaphragm, together with the control of the number of revolutions of the fan gives a considerable improvement in retaining the required air flow, especially when only small quantities of air are necessary.

Up till now the adjustment of the diaphragm has always been carried out by hand. This of course is a time consuming operation not only in view of the fact of the adjustment of the diaphragms themselves but also because a regular control is necessary to determine the desired flow of air, dependent on the temperature in the room. The farmer or fattener therefore has to adjust the diaphragm regularly when the weather conditions change also when an automatically controlled fan is used.

The main purpose of the present invention is to improve this situation and to obtain further advantages which will be set out later.

Over the exhaust ventilation shaft there is always a cover which is especially applied to avoid entrance of rain and for guiding the out-streaming flow of air. The form of this cover, usually called "cap", which term will also be used in the following description, as a matter of fact has some influence on the resistance which is felt by the out-streaming air. This also has influence on the counter-pressure at the fan. Since in systems of the prior art the cap always has a fixed position nothing can be done when the counter-pressure changes, for instance by a change of the direction and/or the strength of the wind. This is a disadvantage which for the greater part can be avoided by a special embodiment of an exhaust ventilation shaft according to the invention. In this special embodiment the cap is adjustable in height over the end of the ventilation shaft. In this case the cap can take over the function of the diaphragm at the lower side of the ventilation shaft. In general however, according to a special embodiment of the present invention both an adjustable diaphragm at the lower side and a adjustable cap at the upper side of the ventilation exhaust shaft will be used. These two devices can be adjusted simultaneously or separately. Preferably they are controlled simultaneously for instance by a mechanical coupling between the adjustment devices for the diaphragm and for the cap.

A ventilation exhaust shaft according to the invention for vertical location on a life-stock house, especially for pigs, has a controllable axial fan and is characterized by the fact that at least at one end of the shaft a device is present with which the intensity of the air flow through the shaft can be altered due to the fact that this device has an air transmission opening the size of which can be controlled by an electrical servo-motor.

The servo-motor is preferably controlled by a micro-processor receiving signals from one or more temperature sensors in the room of the life-stock house. The same micro-processor can also control the speed of the fan. By a suitable choice of the adjustments of the micro-processor, experimentally a certain desired relation can be made between the change of the number of revolutions of the fan and the adjustment of one or both organs at the ends of the ventilation shaft. Thereby a very exact adjustment can be realized even with small quantities of required air, especially when the position of the diaphragm and of the cap are controlled simultaneously.

The device at the lower side of the shaft is, according to the invention preferably of such a construction that it contains a valve or piston which is coaxial with the shaft and can be displaced along the axis of the shaft and has one or more openings in the wall of the shaft, the effective transmission surface which is determined by the position of the valve or piston.

In this embodiment it is very advantageous if the openings in the wall of the shaft have such a form that the air transmission characteristic of the effective transmission opening, dependent on the position of the piston or valve, is similar to that of an irisdiaphragm controlled in corresponding manner. In this way a control characteristic of the whole system can be obtained which also in lower regions of the air volume to be displaced is very exact.

According to the invention the openings in the wall of the shaft are thereto formed such that they in principle have a V-form, the narrower part of the V having a relatively short part with two parallel legs.

The movable cap has, according to a preferred embodiment of the invention, the form of a top of which the point is directed to the shaft and with a concave surface on the side facing the shaft. By this form an extremely good stream of air is obtained because a certain streamlining is realized. This special form gives an even better control possibility and moreover the air is blown out more or less in a vertical upwards direction avoiding practically all pollution of surrounding parts of the life-stock house for instance the roof.

The movement of the cap is carried out by a vertical rod connected to the cap which rod is guided in the shaft through a bushing, which bushing is permanently fixed, by means of side strips to the inner side of the wall of the shaft.

The invention will now be set out in more detail with reference to a drawing, which represents, partly in cross-section and partly in plan view, the entire lay-out of an embodiment of a ventilation shaft according to the invention.

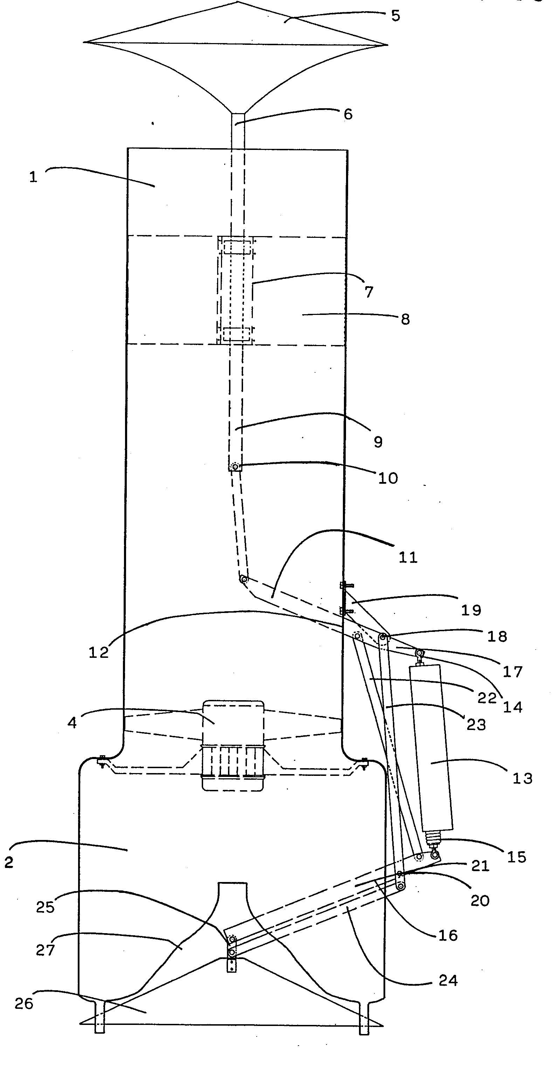

The ventilation shaft 1 shown in fig. 1 has on the lower side a widened part 3. The shaft will be suspended from a beam construction (not shown) and consists preferably of a polyester synthetic resin, possibly strengthened with glass fibres. Approximately at the separation point of the cylindrical part 1 and part 2 there is a radial fan 4. At the top there is a vertically adjustable cap 5 which has the form of a top of which the point is pointing in the direction of the fan. The vertical rod 6 supporting the cap 5 passes through nylon rings in part 7 which is joined to the inner wall of the shaft 1 by means of the cross strips 8 consisting preferably of aluminium which are fastened by glueing to the wall of the shaft 1. The vertical rod 6 of the cap is prolonged in a rod 9 and is connected thereto with a bolt 10. This bolt 10 passes through a slot either in the rod 6 or in the rod 9; the cap can thus be adjusted at the correct height. This adjustment usually occurs only once when mounting the device. At the lower side the rod 9 passes, via the rod 11 through a slot 12 in the shaft 1 and is connected with a system of rods enabling the cap to be adjusted in height. This system of rods is operated by the servo-motor 13 having at one end an eyelet 14 which is connected to the housing of the motor 13. At the other end the shaft 15 of the motor protrudes and the length of this shaft is controlled when the motor is operated. The total length from the eyelet 14 to the eyelet in the rod 15 therefore varies. A lever 16 is rotatably connected to the eyelet in rod 15; at the other end the eyelet 14 is rotatably connected to the lever 17. This lever 17 turns around an axis 18 which is kept in a fixed position with respect to the shaft by means of the bracket 19. The levers 16 and 17 are interconnected by the rod 22. The lever 16 rotates around an axis 20 located in the rod 21. The lever 16 therefore does not rotate around a fixed point. It could be said therefore that the servo-motor is suspended in a floating manner. By increasing or decreasing the length between the eyelet 14 and the eyelet in rod 15 the levers 16 and 17 move to or from each other and in this way operate rod 11 and the cap 5 connected thereto. This "floating" suspension of the servo-motor 13 is room saving because the motor 13 does not have to carry out a circular movement around a fixed point.

Furthermore a rod 23 comprising an axis 20, is rotatably coupled to the rod 24. The rod 21 and 24 together are coupled to a short rod 25 (rotatable) which carries the piston or valve 26 with which the size of the diaphragm 27 can be controlled. According to the invention with the system of rods 22, 23 and 12, 24 a parallel guidance of the piston or the valve 26 is obtained. The form of the opening 27 is chosen such that the characteristic of the effective transmission opening, dependent on the position of the piston 26, corresponds to that of an irisdiaphragm. In this way it is achieved that the accuracy of the control with small volumes of air is very great, which could not have been realized otherwise.

The invention is not limited to the embodiments shown. So for instance that part of the shaft which is located below the fan can have a diameter which increases gradually instead of the abrupt increase of the diameter according to the embodiment shown. The valve or piston can also have a different form. The form represented is however preferred because from the stand point of strength, transmission capacity and a possible pollution it is an optimal contruction.

Claims

1. Ventilation exhaust shaft for vertical installation on a life-stock house, especially on a life-stock house for pigs, containing a controllable axial fan, characterized in that the shaft is provided at at least one of the two ends with a device with which the intensity of the flow of air through the shaft can be varied because this device has an air flow transmission opening the size of which can be controlled by an electrical servo-motor.

2. Ventilation exhaust shaft, according to claim 1, characterized in that the device at the lower side of the shaft contains a valve or piston which is coaxial with the shaft and displaceable along the axis of the shaft and that one or more openings in the wall of the shaft are present the effective transmission surface of which is determined by the position of the valve or piston.

3. Ventilation exhaust shaft according to one of the foregoing claims, characterized in that the openings in the wall of the shaft have such a form that the air transmission characteristic of the effective transmission opening thereof, dependent on the position of the piston or valve corresponds to that of a similarly controlled irisdiaphragm.

4. Ventilation exhaust shaft according to one of the foregoing claims, characterized in that the openings in the wall of the shaft are in plan view V-like, the narrower part of the V-form having two parallel lines over a relatively short length.

5. Ventilation exhaust shaft according to claim 1, 2, 3 or 4 characterized in that the device at the top side of the shaft consists of an adjustable cap located over the shaft.

6. Ventilation exhaust shaft according to claim 5, characterized in that the cap has the form of a top with the point directed to the shaft and has a concave surface at the side of the shaft.

7. Ventilation exhaust shaft, according to claim 5 or 6, characterized in that the cap is supported by a vertical rod slidingly located in a bushing arranged in the upper part of the ventilation shaft.

8. Ventilation exhaust shaft according to one or more of the claims 1, 2, 3, 4, 5, 6 or 7, characterized in that the devices at both ends of the shaft are mechanically coupled in such manner that when increasing or decreasing respectively the air transmitting opening of one of the devices also the transmitting opening of the other device is increased or decreased respectively.

9. Ventilation exhaust shaft according to one or more of the foregoing claims, characterized in that the servo-motor when controlled obtains a greater or smaller length and that this motor is free floatingly suspended between levers which actuate the cap and the diaphragm at the lower side.

10. Environment control system for a life-stock house, especially for pigs, provided with a ventilation air shaft according to one or more of the foregoing claims, characterized in that the number of revolutions of the fan and, via the servo-motor, the position of the devices at the ends of the shaft are controlled by a micro-processor which is controlled by a signal derived from one or more temperature sensors in the life-stock house.

11. Environment control system according to claim 10, characterized in that the number of revolutions of the fan and the position of the devices at the ends of the shaft are simultaneously controlled.

12. Life-stock house, especially life-stock house for pigs provided with a ventilation exhaust shaft according to one or more of claims 1 till 9 inclusive

0173374

and/or an environment control system according to claim 10 or 11.

13. Valve or piston for a ventilation exhaust shaft, according to one of the claims 1 to 9 inclusive, characterized in that it has the form of a cone.


Eindhoven, June 17, 1985

1/1

0173374

European Patent
Office

**EUROPEAN SEARCH REPORT**

0173374

Application number

EP 85 20 1224

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 116 771 (NORDISK VENTILATOR) * Figures 1,2; pages 3-6 * | 1,12 | A 01 K 1/00 F 24 F 7/06 |
| Y | | 10,12 | |
| A | | 2 | |
| | --- | | |
| Y | US-A-3 352 225 (FFISKE) * Figures 1,2; column 2, line 1 - column 3, line 17 * | 10,12 | |
| A | | 1,11 | |
| | ----- | | |

**TECHNICAL FIELDS SEARCHED (Int. Cl.4)**

A 01 K
F 24 F

The present search report has been drawn up for all claims

| Place of search | Date of completion of the search | Examiner |
|---|---|---|
| THE HAGUE | 31-10-1985 | VILBIG K |

EPO Form 1503 03.82